# EUROPEAN PATENT SPECIFICATION

(11) **EP 3 822 166 B1**
(45) Date of publication and mention of the grant of the patent: **03.04.2024**
(21) Application number: 20208569.2
(22) Date of filing: 14.02.2017
(51) Int. Cl.: B64D 11/00, B64D 11/04, B65F 1/00, B65F 1/14

(54) **FLUID RECEIVING CONTAINER**
FLÜSSIGKEITSAUFNAHMEBEHÄLTER
CONTENEUR DE RÉCEPTION DE FLUIDE

(30) Priority: 25.02.2016 DE 102016103376
(43) Date of publication of application: 19.05.2021
(62) Divisional of application: 17156077.4
(73) Proprietor: Airbus Operations GmbH, 21129 Hamburg (DE)
(72) Inventor: Reiss, Matthias, 21129 Hamburg (DE); Kiehne, Oliver, 21129 Hamburg (DE); Lutzer, Wilhelm, 21129 Hamburg (DE); Spille, Marc, 21129 Hamburg (DE)

(56) References cited:
- US-A- 6 006 373
- US-A- 6 055 996
- US-A1- 2009 012 485
- US-A1- 2012 060 271
- US-A1- 2015 108 888

## Description

### TECHNICAL FIELD

The invention pertains to a fluid receiving container.

### BACKGROUND OF THE INVENTION

A trolley for collecting waste products is used in a vehicle, particularly in an aircraft. Foods and beverages are frequently consumed aboard vehicles that serve for transporting passengers and result in waste products. The waste products may therefore consist of solid and/or liquid waste. Aboard passenger aircraft, in particular, these waste products are predominantly collected by the cabin crew. The collected waste products have to be disposed after the end of the journey. Since the disposal at random destinations is respectively associated with disposal fees, waste products are frequently stored aboard the vehicle and subsequently disposed at a target location, particularly a home airport. In vehicles intended for traveling short distances, in particular, the cabins of the vehicles are designed for a large number of passenger seats. The vehicles therefore only have a small capacity for the storage waste products.

For example, the waste products may comprise paper cups, small cartons, bottles, cans and/or bags. The waste products may furthermore comprise fluids such as, for example, the remains of a beverage in a can or bottle. If waste products of this type are collected in garbage bags, they contain a mixture of solid waste and liquid waste. This can be attributed, for example, to cans or bottles with remains of a fluid being placed into said garbage bag. Although the fluids in the cans or bottles may basically be poured into a drain, for example, in a galley or in a laboratory, this proved to be impractical. The waste products are collected by means of the rolling trolleys, with which the cabin crew walks through an aisle of the vehicle and in the process collects waste products from the passengers.

If solid waste and liquid waste products are collected in a common garbage bag, these waste products subsequently require an elaborate separation prior to their disposal. It was furthermore determined that the fluid content of the waste products collected in such a garbage bag is not compactible. Although the compaction of the waste products in the garbage bag could be increased, for example, by extracting air from the garbage bag, this compaction is still limited by the fluid content of the waste products.

Document EP 2 949 459 A1 discloses a waste compaction system. The waste compaction system comprises a trolley with an internally arranged compaction enclosure that has rigid lateral surfaces, wherein the compaction enclosure can be compacted by extracting air from the interior thereof. While the air is extracted, the rigid lateral surfaces move toward one another in the horizontal direction such that a vertically elongate and horizontally contracted compaction enclosure is formed and the waste products are compacted therein. US2009012485 A1 discloses a prior art example of a liquid receiving container for collecting waste.

### SUMMARY OF THE INVENTION

The trolley, which is not covered by the appended claims, comprises a fluid receiving container with an upper container opening. Fluid may be introduced into an interior of the fluid receiving container through the upper container opening. The fluid receiving container is designed for receiving fluid. For this purpose, lateral walls and/or a bottom of the fluid receiving container may be realized in a fluid-tight fashion. The fluid receiving container is preferably realized rigidly. For example, the lateral walls and/or the bottom of the fluid receiving container may be made of a rigid material. The lateral walls and/or the bottom of the fluid receiving container are preferably made of plastic, metal or a combination thereof. If the lateral walls and/or the bottom of the fluid container are made of plastic, this plastic may be reinforced with fibers. Due to the rigid design of the fluid receiving container, the shape of the fluid receiving container can be ensured during its use such that the fluid receiving container can accommodate a certain volume of fluid. In other words, the fluid receiving container is preferably dimensionally stable. In addition, a fluid-tight window may be integrated into one of the lateral walls of the fluid container such that the filling level of the fluid container is visible. Otherwise, the sidewalls may be realized opaquely. The fluid receiving container may be realized in the form of an at least essentially solid or rigid container. In an example, the fluid receiving container may be formed as a unit being formed independently form the trolley housing. Thus, the fluid receiving container may be formed as an individually handable unit or individually handable container unit.

The fluid receiving container is arranged in or laterally on the trolley housing. The fluid receiving container may be suspended in the trolley housing for this purpose. The fluid container furthermore may preferably be suspended in the waste enclosure and/or in the trash bag, wherein the fluid receiving container is preferably fastened on the trolley. This design provides the advantage that the external dimensions of the trolley housing are not changed. The trolley may therefore still have standardized dimensions such as, for example, the dimensions of a full-size trolley or a half-size trolley. Alternatively, the fluid receiving container may be laterally arranged on the housing. For this purpose, the fluid receiving container may be laterally suspended on the trolley housing and/or fastened thereon. The fastening of the fluid receiving container may be realized by respectively providing the fluid receiving container and the trolley housing with correspondingly designed fastening elements. For example, the fluid receiving container may engage into a groove or a bore of the trolley housing with a corresponding hook in order to be fastened thereon. In this case, the fluid receiving container is detachably connected to the trolley housing. However, the fluid container may alternatively also be permanently connected to the trolley housing. Preferably, no direct fluidic connection respectively exists between the fluid receiving container and the waste enclosure or the trash bag, which is preferably suspended therein. Further, the interior of the fluid receiving container may hydraulically and/or pneumatically decoupled from an interior of the waste enclosure. It is furthermore preferred to realize the fluid receiving container in the form of an independent unit such that the fluid container may be arranged on the trolley housing in a module-like fashion.

The fluid receiving container comprises a container suction port. The container suction port is designed for providing a fluidic connection with the interior of the fluid receiving container. The container suction port therefore serves for extracting a fluid from the interior of the fluid container. The container suction port is arranged in such a way that a fluid can be extracted from a bottom region of the interior of the fluid receiving container. For this purpose, the container suction port may be integrated into a lower end section of a lateral wall or into the bottom wall of the fluid receiving container. The container suction port may be realized, for example, in the form of a tubular connecting element. It is furthermore preferred that the container suction port is realized in the form of a check valve, wherein the check valve allows a volume flow from the interior of the fluid receiving container and blocks a volume flow in the opposite direction. In addition, the check valve is preferably realized in an automatically closing fashion such that a minimum differential pressure has to be provided between the inlet and the outlet of the check valve in order to open the check valve. Otherwise, the check valve closes automatically, for example, under the influence of a spring force. The minimum differential pressure is preferably chosen such that the check valve does not open when the interior of the fluid receiving container is completely filled with fluid. A fluid line or another port may be coupled to the container suction port in order to extract a fluid from the fluid receiving container. An additional port may particularly be assigned to the trolley housing, wherein the container suction port is coupled to the additional port when the fluid receiving container is arranged on the trolley housing.

Since the fluid receiving container is respectively decoupled from the waste enclosure or the trash bag, a separation between the liquid waste and the remaining waste may already take place during the collection of the waste products. The fluids may be placed into the fluid receiving container. The remaining waste products may be respectively placed into the waste enclosure or into the trash bag. This simplifies the subsequent disposal of the different types of waste products. In addition, no mixing of waste products takes place within the trolley. For example, when the trolley is coupled to a docking station, the fluid may be extracted from the fluid receiving container and stored in a container provided in the trolley or the vehicle for this purpose. If a trash bag is suspended in the waste enclosure, this trash bag can likewise be disposed separately. In this case, the trash bag and/or the waste enclosure can be compacted such that they respectively have a particularly small volume in order to thereby simplify the handling and storage.

The fluid receiving container may furthermore comprise a handle that is preferably arranged on the outer side of a sidewall of the fluid receiving container. In this way, the fluid receiving container may be taken hold of by the cabin crew and then detached from the trolley housing by disengaging the correspondingly designed fastening elements. The fluid container may thereby be removed from the trolley housing.

It is furthermore conceivable to provide the fluid receiving container with a hinged cover for covering and/or closing the container suction port. In this case, the hinged cover may be mounted in such a way that it covers or closes the container suction port, for example by means of a spring, when the fluid receiving container is respectively detached from the trolley housing or from the housing docking station. The container suction port is thereby prevented from being freely accessible when the fluid receiving container is handled while it is respectively detached from the trolley or the trolley housing. This improves the hygiene while the fluid receiving container is handled. It is additionally or alternatively conceivable to provide the fluid receiving container with an additional hinged cover for covering and/or closing the container pressure port. With respect to this additional hinged cover, analogously reference is made to the preceding description of the aforementioned hinged cover of the fluid receiving container. It is also conceivable to realize both hinged covers of the fluid receiving container or of the housing docking station in the form of a common hinged cover.

Another advantageous embodiment of the fluid receiving container is characterized in that a fluid receiving bag is suspended in the interior of the fluid receiving container. The fluid receiving bag may be realized in the form of a bag or a sack of sorts. In this case, a port is integrated into the fluid receiving bag and may be coupled to the container suction port such that fluid may be extracted from the interior of the fluid receiving bag by means of the container suction port. An at least indirect extraction of fluid from the interior of the fluid receiving container thereby also takes place. The above-described aspects, advantages and effects therefore apply analogously to this embodiment. After the fluid receiving bag has been used, it may be replaced with a new fluid receiving bag such that the hygiene is improved.

The fluid receiving container may be coupled to the cabin docking station or as well as to a housing docking station of the trolley housing. For example, if the fluid receiving container is initially coupled to the housing docking station of the trolley housing in order to collect fluid in the interior of the fluid receiving container by means of the trolley, the fluid receiving container may be detached from the housing docking station after the fluid has been collected in order to be subsequently coupled to the cabin docking station. In this case, a fluidic connection between the container suction port and the station suction port of the cabin docking station is produced. The station suction port of the cabin docking station is preferably connected to a vacuum source of the vehicle such that the fluid is extracted from the interior of the fluid receiving container. The vacuum source may comprise, for example, a vacuum pump. Due to the above-described procedure, the fluid receiving container may be very easily handled and simultaneously serves for separately collecting fluid by means of the trolley. The disposal may likewise be realized very easily by coupling the fluid receiving container to the cabin docking station. All in all, the collection and the disposal of liquid waste are thereby simplified.

The fluid receiving container comprises a container pressure port, by means of which rinsing fluid may be filled into the interior of the fluid receiving container, wherein the cabin docking station comprises a station pressure port, and wherein the container pressure port and the station pressure port of the cabin docking station are realized in such a way that a fluidic connection between the container pressure port and the station pressure port of the cabin docking station is produced when the fluid receiving container is coupled by means of the associated coupling unit to the cabin docking station.

With respect to the station pressure port of the cabin docking station, analogously reference is made to the station pressure port of the housing docking station, wherein corresponding embodiments, characteristics, advantages and/or effects also apply, insofar as sensible, to the station pressure port of the cabin docking station. When the fluid container is coupled to the cabin docking station, a fluidic connection is consequently produced between the container pressure port and the station pressure port of the cabin docking station such that rinsing fluid may be respectively conveyed or sprayed into the interior of the fluid receiving container via this fluidic connection in order to clean said interior. For this purpose, the station pressure port of the cabin docking station may be connected to a rinsing fluid source, particularly of the vehicle, in order to respectively convey or spray the rinsing fluid into the interior of the fluid receiving container. The rinsing fluid source may comprise a pump for conveying rinsing fluid. The fluid receiving container may be cleaned after each use for collecting fluids in order to comply with the applicable hygienic requirements.

### DESCRIPTION OF THE INVENTION

Other characteristics, advantages and potential applications of the present invention may be gathered from the following description of exemplary embodiments and the figures. In this respect, all described and/or graphically illustrated features form the subject of the invention individually and in arbitrary combination, namely regardless of their composition in the individual claims or their references to other claims. In the figures, identical or similar objects are furthermore identified by the same reference symbols.
- Figure 1: shows a the trolley in the form of a schematic perspective view.
- Figure 2: shows a section of the trolley in the form of a schematic perspective view.
- Figure 3: shows an embodiment of a rear wall of the fluid receiving container in the form of a schematic view.
- Figure 4: shows the housing docking station in the form of a schematic top view.
- Figure 5: shows another embodiment of the bottom of the fluid receiving container in the form of a schematic view.
- Figure 6: shows the cabin monument in the form of a schematic perspective view.
- Figure 7: shows another trolley in the form of a schematic side view.
- Figure 8: shows an embodiment of the fluid receiving container in the form of a schematic perspective view.
- Figure 9: shows another trolley in the form of a schematic sectional view.
- Figure 10: shows another trolley in the form of a schematic sectional view.
- Figure 11: shows another cabin monument in the form of a schematic perspective view.
- Figure 12: shows the station docking station in the form of a schematic top view.

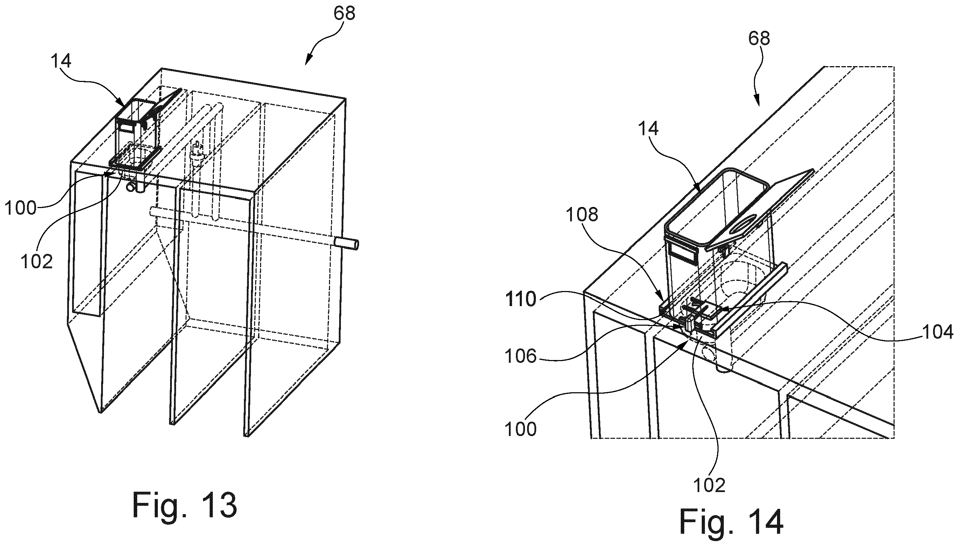

- Figure 13: shows another cabin monument in the form of a schematic perspective view.
- Figure 14: shows the cabin monument of Fig. 13 in a more detailed view.

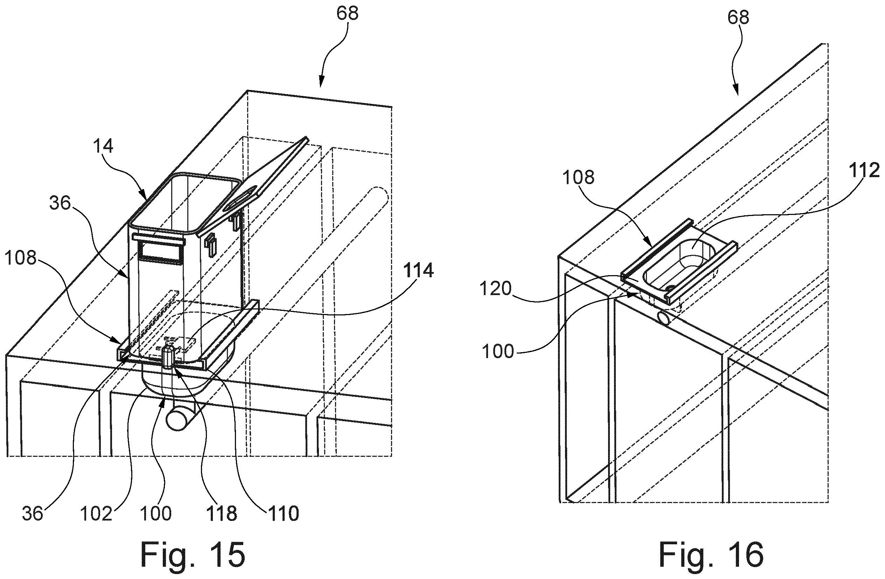

- Figure 15: shows another cabin monument in the form of a schematic perspective view.
- Figure 16: shows the cabin monument of Fig. 15 in a more detailed view.

### DETAILED DESCRIPTION OF EXEMPLARY EMBODIMENTS

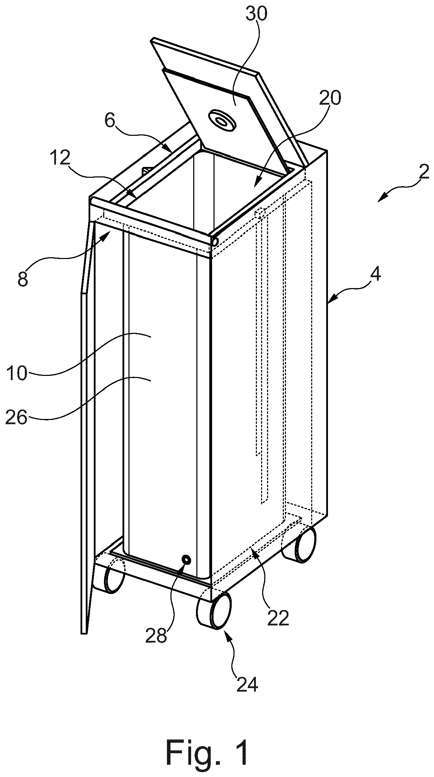

Figure 1 shows a trolley 2. The trolley 2 serves for collecting waste products in a vehicle. The vehicle is preferably an aircraft. The trolley 2 comprises a trolley housing 4 with an upper housing opening 6. The trolley 2 may be realized in the form of a so-called full-size trolley or half-size trolley in this case. In order to collect waste products, the trolley 2 may be pushed through a cabin aisle of the aircraft such that the cabin crew may accept waste products from the aircraft passengers and collect these waste products in the trolley. Practical experience has shown that the waste products essentially consist of solid waste and liquid waste. In order to simplify the disposal of the liquid waste such as, for example, the remains of beverages from cans or bottles, it is proposed to collect the liquid waste separately of the solid waste. A waste enclosure 10 is suspended in the housing interior 8 of the trolley housing 4 in order to receive solid waste that, however, may also contain small quantities of liquid waste. The waste enclosure 10 is preferably realized in the form of a plastic waste enclosure. According to Figure 1, the waste enclosure 10 extends from an associated upper enclosure opening 12 to a bottom 22 of the waste enclosure 10. A wall 26 of the waste enclosure 10 extends between the bottom 22 of the waste enclosure 10 and the upper enclosure opening 12. The waste enclosure 10 may therefore form a trash bag. Alternatively, a (not-shown) trash bag may be suspended in the waste enclosure 10. In this case, the trash bag may be exchanged. If solid waste is collected in the trash bag, it is ensured that the waste enclosure 10 does not come in contact with the solid waste and therefore is also not soiled. The exchangeable trash bag therefore may be removed from the waste enclosure 10 as needed and stored separately such that the trolley with the waste enclosure 10 may be used for collecting additional solid waste once a new trash bag is suspended in the waste enclosure 10.

The enclosure opening 12 of the waste enclosure 10 and the housing opening 6 of the trolley housing 4 are arranged relative to one another in such a way that waste products may be introduced through the housing opening 6 and the enclosure opening 12. If the waste enclosure 10 itself serves for receiving waste products, particularly solid waste, the waste products are directly introduced into the interior 20 of the waste enclosure 10. However, if a trash bag is suspended in the waste enclosure 10, this trash bag likewise comprises a bag opening that is detachably fastened on the enclosure opening 12 and/or on a section of the waste enclosure 10 arranged adjacent thereto. This ensures that the bag opening, the enclosure opening 12 and the housing opening 6 are arranged relative to one another in such a way that waste products, particularly solid waste, may be introduced into an interior of the trash bag through the housing opening 6, the enclosure opening 12 and the bag opening.

The trolley 2 comprises rollers 24 on an associated underside of the trolley housing 4 in order to collect waste products from a plurality of passengers and/or at different locations in the aircraft. The trolley 2 is therefore preferably realized in the form of a rolling trolley 2. Consequently, the trolley 2 may be realized in the form of a cart and/or rolling cart of sorts.

Once the waste enclosure 10 and/or a trash bag suspended therein is filled with at least essentially solid waste by the cabin crew, practical experience has shown that this waste frequently does not have a high volumetric density. For example, the solid waste also may be at least partially formed, for example, by beverage cans or beverage cartons, as well as cartons for the prior storage of foods. Waste products of this type may be respectively compacted or compressed by extracting air from the trash bag or from the waste enclosure 10. This is achieved in that the waste enclosure 10 and/or the trash bag may be at least partially deformable. For example, the sidewalls 26 of the waste enclosure 10 and/or the sidewalls of the trash bag may be deformable. A suction port 28 may be furthermore integrated into a sidewall 26 and/or into a bottom 22 of the waste enclosure 10 in order to extract fluid, particularly air, from an interior 20 of the waste enclosure 10. The enclosure opening 12 may be sealed in a fluid-tight fashion by means of a cover 30 in order to achieve the compaction of the waste enclosure 10 due to the extraction of fluid or air, respectively. The cover 30 may be assigned to the waste enclosure 10. Alternatively, the cover 30 may be realized in the form of a separate cover. The cover 30 may be integrally connectable to the enclosure opening 12 such that a sealed enclosure can be formed around the interior 20. Once the interior 20 is thusly sealed with the exception of the suction port 28, compaction of the waste enclosure 10 is achieved due to the extraction of fluid or air from the interior 20, wherein the cover 30 and the waste enclosure 10 are at least essentially realized in a fluid-tight fashion. The suction port 28 may be at least indirectly connected to another port, particularly a vacuum source. Additional means such as, for example, a fluid line and/or other line elements for the extraction of fluid may be provided for this purpose. The suction port 28 may furthermore be realized in the form of a check valve that allows a volumetric flow from the interior 20 of the waste enclosure 10 and blocks a volumetric flow in the opposite direction. Due to the utilization of such a check valve, it may be ensured that the waste enclosure 10 also maintains the corresponding compact shape after the compaction and therefore may be handled in a particularly space-saving and/or simple fashion.

If a trash bag is suspended in the waste enclosure 10, this trash bag may analogously comprise the above-described features of the waste enclosure 10. A suction port of the trash bag may be connected to the suction port 28 of the waste enclosure 10 in such a way that air and/or a fluid may be extracted from the interior of the trash bag. Alternatively, the trash bag may not comprise a suction port. In this case, the trash bag is compressed due to the compaction of the waste enclosure 10 and thereby also compacted. After the compaction, the trash bag may be removed from the waste enclosure 10 and stored at a location provided for this purpose. Alternatively, the waste enclosure may be expanded again after the compaction such that the compacted waste remains in a bottom region of the trash bag and additional waste products may be collected. In this way, the respective storage capacity of the trash bag or the waste enclosure 10 may be increased.

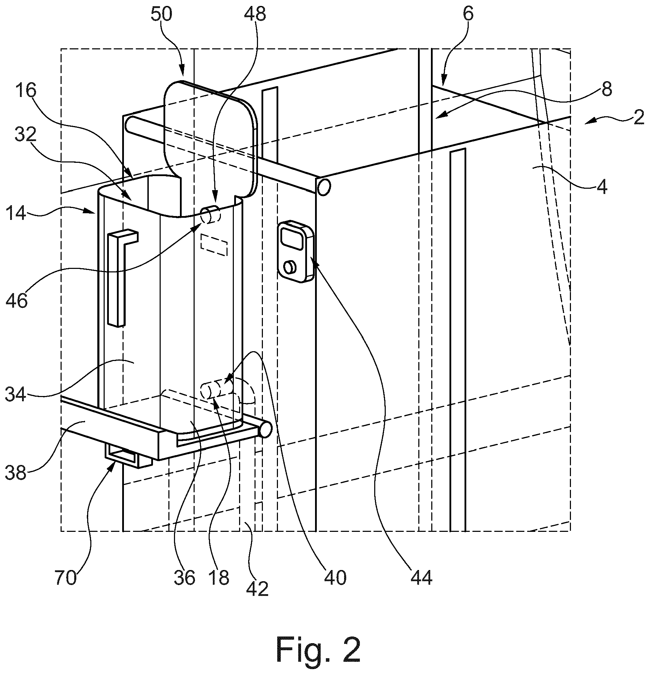

The trolley 2 furthermore comprises a fluid receiving container 14. A section of the trolley 2 with the fluid receiving container 14 is schematically illustrated in Figure 2. The fluid receiving container 14 comprises an upper container opening 16. Fluid may be introduced into an interior 32 of the fluid container 14 through the upper container opening 16. The interior 32 is bounded by sidewalls 34 of the fluid receiving container 14. The fluid receiving container 14 comprises a bottom 36. The sidewalls 34 preferably extend from the container opening 16 to the bottom 36 of the fluid receiving container 14. The bottom 36 of the fluid receiving container 14 is also referred to as container bottom 36. This applies accordingly to the sidewalls 34, which may be referred to as container sidewalls 34. The container sidewalls 34 and the container bottom 36 are realized in a fluid-tight fashion such that fluid is prevented from escaping from the interior 32 of the fluid receiving container 14 unobstructedly.

According to Figure 2, the fluid receiving container 14 is preferably arranged laterally on the trolley housing 4. The fluid receiving container 14 may alternatively be arranged in the trolley housing 4. In order to arrange the fluid receiving container 14 laterally on the trolley housing 4, the trolley housing 4 preferably comprises a housing docking station 38 exemplarily of the type illustrated in Figure 2. The housing docking station 38 may be realized in the form of a rigid plate of sorts. The fluid receiving container 14 is respectively placed or positioned on the housing docking station 38. The fluid receiving container 14 is thereby arranged laterally of the remaining trolley housing 4. In order to securely hold the fluid receiving container 14 on the docking station 38, the fluid receiving container 14 comprises a coupling unit, by means of which the fluid receiving container 14 may be detachably coupled to the housing docking station 38. The housing docking station 38 may comprise elements, which are designed corresponding to the coupling unit 54 of the fluid receiving container 14, in order to produce a positive and/or non-positive connection between the housing docking station 38 and the fluid receiving container 14. In a positive connection, in particular, the fluid receiving container 14 is detachably connected to the trolley housing 4, particularly to the associated housing docking station 38.

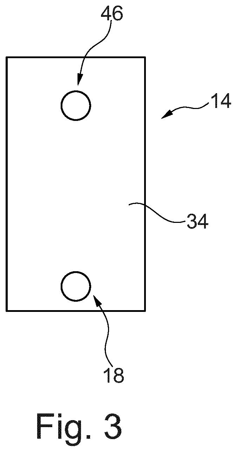

It is furthermore proposed that the fluid receiving container 14 comprises a container suction port 18. The container suction port 18 is preferably integrated into a container sidewall 34. However, the container suction port 18 may in principle also be integrated into the container bottom 36 of the fluid receiving container 14. Figure 3 shows a rear container sidewall 34. The container suction port 18 is integrated into the rear container sidewall 34. In this case, the container suction port 18 is arranged in a bottom end section of the container sidewall 34 in such a way that a fluidic connection with the bottom section of the interior 32 of the fluid receiving container 14 is produced by means of the container suction port 18. Consequently, the container suction port 18 serves for producing a fluidic connection in order to extract a fluid from the bottom section of the interior 32 of the fluid receiving container 14.

The container suction port 18 is in the form of an automatically closing or switchable check valve. If the container suction port 18 is realized in the form of an automatically closing check valve, the valve is closed as long as a minimum differential pressure between the interior 32 of the fluid receiving container 14 and an outer end of the check valve is not reached. The minimum differential pressure is chosen in such a way that the valve does not open when the interior 32 of the fluid receiving container 14 is filled with fluid. However, the check valve may be opened by applying a sufficient vacuum for exceeding the minimum differential pressure to the outlet of the check valve. In this case, the check valve opens such that fluid may be extracted from the interior 32 of the fluid receiving container 14 through the container suction port 18. In order to respectively apply the aforementioned vacuum to the outlet of the container suction port 18 or the check valve, the container suction port 18 may be detachably coupled to a first coupling port 40 of the trolley housing 4 in order to produce a fluidic connection between the container suction port 18 and the first coupling port 40. The first coupling port 40 may furthermore be connected to a fluid line 42 such that a fluidic connection with a vacuum source, particularly with a pump, may be produced in order to extract fluid from the interior 32 of the fluid receiving container 14. The detachable fluidic connection between the container suction port 18 and the first coupling port 40 may be automatically produced when the fluid receiving container 14 is placed on the housing docking station 38. The extraction of fluid from the interior 32 of the fluid receiving container 14 may be activated by means of a control element 44. When the control element 44 is actuated, a vacuum is applied to the container suction port 18 in order to open the check valve, if applicable, such that the fluid may flow from the interior 32 through the container suction port and the other above-described elements.

According to the exemplary embodiment illustrated in Figure 2, the fluid receiving container 14 may protrude over the remaining trolley housing 4 due to its lateral arrangement on the trolley housing 4. If this should be avoided, for example, when the trolley 2 is pushed into an assigned parking space or when the fluid receiving container 14 is not needed, it proved advantageous to realize the housing docking station 38 such that it may be laterally pivoted into the trolley housing 4 or retracted into the trolley housing 4. It is accordingly proposed that the housing docking station 38 respectively may be laterally extended from the trolley housing 4 or laterally pivoted out of the trolley housing 4. When the housing docking station 38 is respectively extended or pivoted out, the fluid receiving container 14 may once again be placed thereon in order to resume the above-described use of the fluid receiving container 14.

A handle 70 may be assigned to the housing docking station 38 in order to respectively extend and/or retract the housing docking station or pivot the housing docking station 38 in and/or out, wherein said handle is also externally accessible in a retracted state or in an inwardly pivoted state of the housing docking station 38.

Once fluid has been extracted from the interior 32 of the fluid receiving container 14, the fluid container 14 basically is once again available for collecting liquid waste. According to practical experience, however, it is preferable to previously clean the interior 32 of the fluid receiving container 14. For this purpose, the fluid receiving container 14 may comprise a container pressure port 46. The container pressure port 46 is integrated into the container sidewall 34 or into the container bottom 36. The container pressure port 46 is designed for filling rinsing fluid into the interior 32 of the fluid receiving container 14. On the side facing the interior 32, the container pressure port 46 may be realized in the form of a nozzle of sorts such that the rinsing fluid may be sprayed into the interior 32. This simplifies the cleaning of the interior 32 of the fluid receiving container 14. The container pressure port 46 may furthermore be realized in the form of a check valve of sorts, which allows a fluid flow into the interior 32 of the fluid receiving container 14 and blocks an opposite fluid flow. This ensures that liquid waste does not escape from the interior 32 of the fluid receiving container 14 unobstructedly.

In Figure 3, the rear container wall 34 is also illustrated with the container pressure port 46. The container pressure port 46 is preferably arranged in an upper end section of the container wall 34. The trolley 4 may comprise a second coupling port 48 in order to convey rinsing fluid to the container pressure port 46. The second coupling port 48 is preferably arranged on the trolley housing 4 in such a way that a fluidic connection between the container pressure port 46 and the second coupling port 48 is produced when the fluid receiving container 14 is respectively positioned or placed on the housing docking station 38. The second coupling port 48 may be coupled to a rinsing fluid pressure source, particularly with the aid of additional lines and/or elements, such that rinsing fluid may be conveyed to the container pressure port 46 and into the interior 32 of the fluid receiving container 14 through this container pressure port. This is carried out after fluid has been extracted from the interior 32 of the fluid receiving container 14 in order to reuse this fluid receiving container for collecting additional liquid waste. After the cleaning process, the rinsing fluid may be extracted by means of the container suction port 18 such that the cleaned fluid receiving container 14 is available for further use. This improves the hygiene during the use of the fluid receiving container 14.

It is furthermore proposed that the fluid receiving container 14 comprises a container cover 50. The container cover 50 is hinged on the container sidewall 34. The container cover 50 makes it possible to close the container opening 16, particularly in a fluid-tight fashion. On the one hand, this prevents liquid waste from accidentally and/or unobstructedly escaping from the interior 32 of the fluid receiving container 14. On the other hand, the container cover 50 prevents rinsing fluid from accidentally splashing out of the interior 32 during the cleaning process.

It was mentioned above with reference to Figures 2 and 3 that the container suction port 18 and/or the container pressure port 46 may be arranged on a rear sidewall 34. However, this arrangement is not imperative. In fact, the container suction port 18 and/or the container pressure port 46 may be respectively arranged on a different sidewall 34 and/or on the container bottom 36.

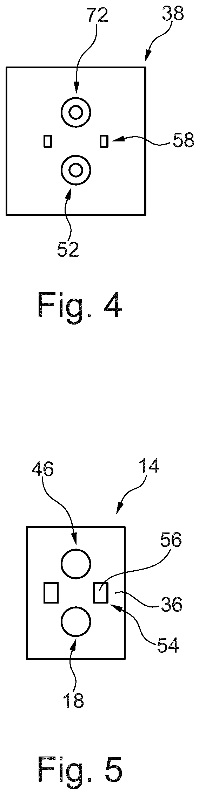

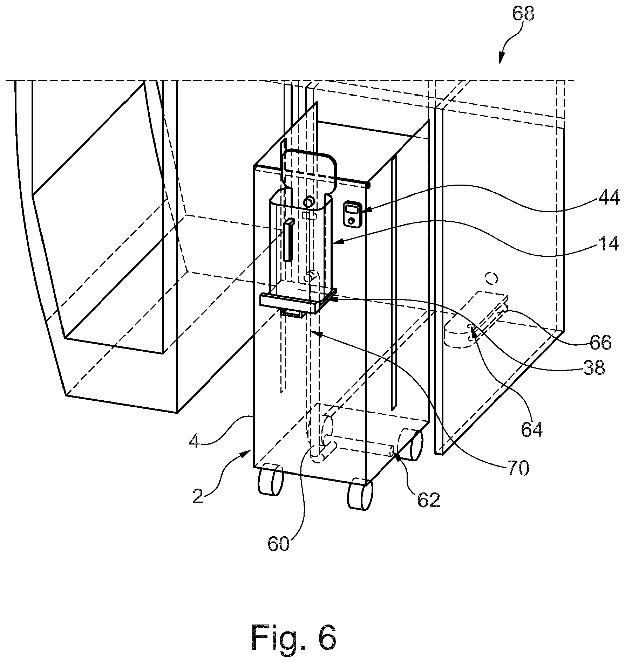

An arrangement of ports is schematically illustrated in Figures 4 and 5. Figure 4 shows the housing docking station 38 in the form of a schematic top view. The housing docking station 38 comprises a station suction port 52 on its upper side. The underside of the container bottom 36 of the fluid receiving container 14 is illustrated in Figure 5. In this case, the container suction port 18 is integrated into the container bottom 36. A coupling unit 54 is furthermore arranged on the container bottom 36. The coupling unit 54 is formed by cavities 56 in the container bottom 36. The coupling unit 54 is preferably provided with two or more cavities 56 as illustrated in Figure 5. The housing docking station 38 comprises at least one coupling element 58, preferably two or more coupling elements 58 as illustrated in Figure 4, in correspondence with the coupling unit 54. Each coupling element 58 may be realized in the form of a pin of sorts or in the form of a different element that protrudes beyond the upper side of the housing docking station 38. A positive connection between the fluid receiving container 14 and the docking station 38 may be produced by means of the coupling elements 58 and the coupling unit 54. Consequently, the fluid receiving container 14 may be detachably coupled to the housing docking station 38 with the aid of the coupling unit 56, for example, by respectively positioning or placing the fluid receiving container 14 on the upper side of the housing docking station 38. In this case, the fluid receiving container 14 is also correspondingly aligned relative to the docking station 38. The container suction port 18 and the station suction port 52 are furthermore realized in such a way that a fluidic connection between the container suction port 18 and the station suction port 52 of the housing docking station 38 is produced when the fluid receiving container 14 is coupled by means of the associated coupling unit 54 to the housing docking station 38. As a result, the desired fluidic connection between the aforementioned ports 18, 52 is automatically produced when the fluid receiving container 14 is placed on the docking station 38. A fluid line 60 preferably leads from the station suction port 52 to a trolley suction port 62. This is illustrated in an exemplary fashion in Figure 6. The trolley 2 may be connected to another port, particularly a suction port 64 of a docking station 66, by means of the trolley suction port 62, wherein the docking station 66 is assigned to a cabin monument 68 and/or an aircraft such that the trolley suction port 62 may produce a fluidic connection with a vacuum source of the cabin monument 68 or the aircraft in order to at least indirectly vacuum off fluid from the interior 32 of the fluid receiving container 14. The vacuum source may comprise a vacuum pump. The extraction of the fluid may be activated by means of the control element 44. For this purpose, the control element 44 may establish, for example, a telemetric connection with an extraction control, particularly the vacuum source, in order to start or stop the extraction.

With respect to the control, it found advantageous if the extraction of the fluid from the fluid receiving container 14 and/or the cleaning of the interior 32 of the fluid receiving container 14 may only take place when it is ensured that the fluid receiving container 14 is coupled to the housing docking station. For this purpose, a sensor may be assigned to the housing docking station 38 and configured to detect the coupling of the fluid receiving container 14. A corresponding sensor signal may be transmitted to a control unit such that the extraction of the fluid from the fluid receiving container 14 and/or the cleaning of the interior 32 of the fluid receiving container 14 may be carried out once the coupling of the fluid receiving container 14 has been detected with the aid of the sensor. If this is the case, a corresponding signal may be optically displayed, for example, with a display element. At this point, the above-described sequence may be initiated by transmitting a signal for extracting the fluid from the fluid receiving container 14 and/or for cleaning the interior 32 of the fluid receiving container 14 to the control unit by means of the control element 44. In this context, corresponding valves and/or a pump may be controlled such that the extraction or the cleaning process is respectively activated. The control unit, the valves and/or the pump may be assigned to the trolley, the housing docking station 38 and/or a cabin monument 68 as illustrated in an exemplary fashion in Figure 6.

Figure 4 furthermore shows that the housing docking station 38 comprises a station pressure port 72. The station pressure port 72 is arranged on the upper side of the housing docking station 38. Figure 5 furthermore shows that the container pressure port 46 is integrated into the container bottom 36. In this case, the container pressure port 46 and the station pressure port 72 are arranged and/or realized in such a way that a fluidic connection between the container pressure port 46 and the station pressure port 72 of the housing docking station 38 is produced when the fluid receiving container 14 is coupled to the housing docking station 38 by means of the associated coupling unit 54. The aforementioned fluidic connection between the container pressure port 46 and the station pressure port 72 of the housing docking station 38 is therefore automatically produced when the fluid receiving container 14 is placed on the housing docking station 38.

The trolley 2 may furthermore comprise a (not-shown) trolley pressure port that is connected to the station pressure port 72 of the housing docking station 38 by means of another fluid line in order to produce a corresponding fluidic connection. The trolley pressure port may be designed and serve for being coupled to an additional port of the docking station 66 in order to produce a corresponding fluidic connection for supplying rinsing fluid. For this purpose, the cabin monument 68 and/or the aircraft may comprise a corresponding fluid pressure source in order to convey rinsing fluid into the interior 32 of the fluid receiving container 14 by means of the above-described elements and fluidic connections. The rinsing process of the interior 32 of the fluid receiving container 14 may likewise be started and/or stopped by means of the control element 44. According to Figure 6, the control element 44 is preferably assigned to the trolley 2. However, the control element 44 may alternatively or additionally also be assigned to the cabin monument 68 and/or the aircraft.

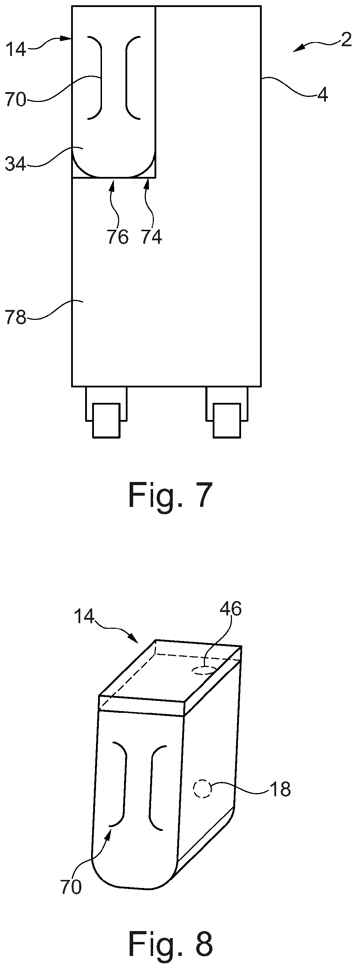

Another trolley 2 is schematically illustrated in Figure 7. The trolley comprises a recess 74 on an end section on the side of the housing opening. The recess 74 is realized in such a way that it may accommodate the fluid receiving container 14. The recess 74 is preferably defined by walls of the trolley housing 4 such that the fluid receiving container 14 may be respectively arranged or fastened detachably and laterally on the trolley housing 4. For this purpose, the trolley housing 4 and the fluid receiving container 14 may comprise correspondingly designed connecting elements. Furthermore, analogously reference is made to the preceding explanations in connection with Figures 2, 3 and 6, wherein the fluid receiving container 14 is presently not held by a separate housing docking station 38, but rather by the trolley housing 4 itself in the region of the recess 74. The trolley housing may therefore comprise corresponding walls 76, which are designed for holding the fluid receiving container 14, in the region of the recess 74. In this embodiment, the first coupling port 40 and/or the second coupling port 48 may also be assigned to the trolley housing in order to respectively produce a fluidic connection with the container suction port 18 or the container pressure port 46. A correspondingly designed fluid receiving container 14 is illustrated in Figure 7. This fluid receiving container comprises a handle 70 on the front side. The container suction port 18 and the container pressure port 46 are arranged on the rear side. When the fluid receiving container 14 is inserted into the recess 74 of the trolley housing 4, it is preferred that at least one container sidewall 34 of the fluid receiving container 14 is aligned flush with a sidewall 78 of the trolley housing 4. At least two container sidewalls 34 of the fluid receiving container 14 preferably are respectively aligned flush with one of the sidewalls 78 of the trolley housing 4. In this way, the trolley may still have the external dimensions of a standardized trolley, particularly a full-size trolley or a half-size trolley.

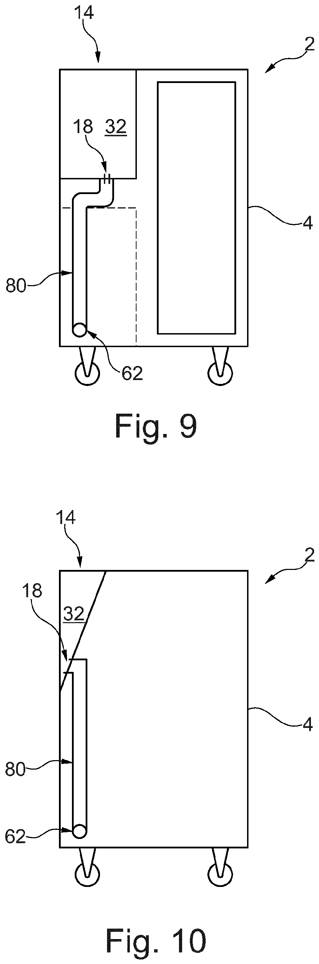

Another trolley 2 is schematically illustrated in Figure 9. Insofar as sensible, analogously reference is made to the preceding explanations. However, the trolley 2 illustrated in Figure 9 may be distinguished in that the fluid receiving container 14 is permanently connected to the trolley housing 4, such an example not being covered by the appended claims. For this purpose, the fluid receiving container 14 may be laterally integrated into the trolley housing 4. The fluid receiving container 14 may also be realized in the form of a module. It furthermore proved advantageous if the container suction port 18 is directly connected to a fluid line 80 that produces a fluidic connection between the container suction port 18 and the trolley suction port 62. The fluid receiving container 14 may have a rectangular cross section as illustrated, for example, in Figure 9. However, the fluid receiving container 14 may also have a different cross section. Figure 10 shows an example of a fluid container 14 with a triangular cross section. The illustration of other elements of the trolley 2 was omitted in Figures 9 and 10 in order to provide a better overview.

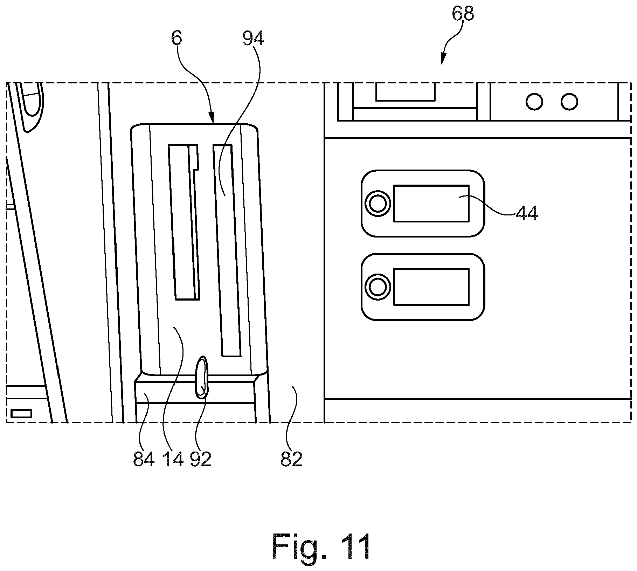

Figure 11 schematically shows part of a cabin monument 68 for a vehicle, particularly an aircraft. The cabin monument 68 preferably is at least partially realized in the form of a cabinet of sorts. For example, the cabin monument 68 may comprise a compartment or a drawer with a bottom plate 82. The cabin monument 68 furthermore comprises a cabin docking station 84 that is preferably arranged on the bottom plate 82. The cabin docking station 84 is realized in such a way that a fluid receiving container 14 may be detachably coupled by means of an associated coupling unit 54 to the cabin docking station 81. The cabin docking station 84 therefore serves for coupling the fluid receiving container 14 thereto. With respect to the fluid receiving container 14, reference is made, insofar as sensible, to the preceding explanations of the fluid receiving container 14. This reference furthermore also applies mutually. The fluid receiving container 14 therefore comprises an upper container opening 6. A container suction port 18 is furthermore provided for the fluid receiving container 14. The arrangement of the container suction port 18 in the bottom 36 of the fluid receiving container 14 was already explained above with reference to Figure 5. Therefore, reference is made once again to the corresponding explanations in connection with Figures 4 and 5 at this point. The container suction port 18 is therefore designed for producing a fluidic connection for extracting a fluid from the bottom of the interior 32 of the fluid receiving container 14.

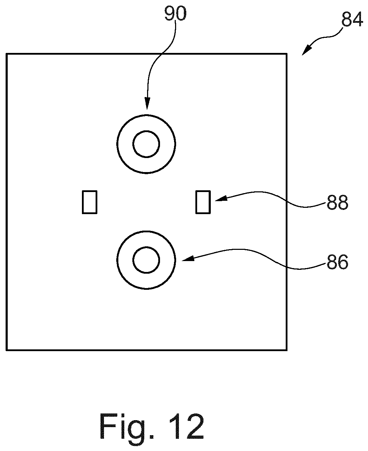

The cabin docking station 84 is realized analogous to the housing docking station 38. With respect to the cabin docking station 84, analogous reference is therefore made, insofar as sensible, to the explanations of the housing docking station 38, particularly in connection with Figure 4. The cabin docking station 84 is illustrated in the form of a top view in Figure 12. The synopsis of Figures 4 and 12 already reveals that the cabin docking station 84 also comprises the other preferred features explained above with reference to the housing docking station 38. The cabin docking station 84 comprises a station suction port 86. The container suction port 18 and the station suction port 86 of the cabin docking station 84 are realized in such a way that a fluidic connection between the container suction port 18 and the station suction port 86 of the cabin docking station 84 is produced when the fluid receiving container 14 is coupled by means of the associated coupling unit 56 to the cabin docking station 84. In order to produce this coupling, the cabin docking station 84 comprises coupling elements 88 that are designed for producing a positive connection with the coupling unit 56 of the fluid receiving container 14. The coupling may therefore be produced analogous to the coupling explained above in connection with the housing docking station 38 and the fluid receiving container 14.

It is furthermore proposed that the fluid receiving container 14 comprises a container pressure port 46 of the type analogously described above with reference to Figure 5. The container pressure port 46 makes it possible to fill or spray rinsing fluid into the interior of the fluid receiving container 14. Furthermore, the cabin docking station 84 preferably comprises a station pressure port 90, wherein the container pressure port 46 and the station pressure port 90 of the cabin docking station 84 are realized in such a way that a fluidic connection between the container pressure port 46 and the station pressure port 90 of the cabin docking station 84 is produced when the fluid receiving container 14 is coupled by means of the associated coupling unit 56 to the cabin docking station 84. In this respect, we once again analogously refer to the preceding explanations of the fluidic connection, which is analogously produced between the station pressure port 72 of the housing docking station 38 and the container pressure port 46.

With respect to the control, it found advantageous if the extraction of the fluid from the fluid receiving container 14 and/or the cleaning of the interior 32 of the fluid receiving container 14 may only take place when it is ensured that the fluid receiving container 14 is coupled to the cabin docking station 84. For this purpose, a sensor may be assigned to the cabin docking station 84 in order to detect the coupling of the fluid receiving container 14. A corresponding sensor signal may be transmitted to a control unit such that the extraction of the fluid from the fluid receiving container 14 and/or the cleaning of the interior 32 of the fluid receiving container 14 may be carried out once the coupling of the fluid receiving container 14 has been detected with the aid of the sensor. If this is the case, a corresponding signal may be optically displayed, for example, with a display element. The above-described sequence may be initiated by transmitting a signal for extracting the fluid from the fluid receiving container 14 and/or for cleaning the interior 32 of the fluid receiving container 14 to the control unit by means of the control element 44 assigned to the cabin monument 68. In this context, corresponding valves and/or a pump may be controlled such that the extraction or the cleaning process is respectively activated. The control unit, the valves and/or the pump may be assigned to the cabin docking station 84, the cabin monument 68 and/or the vehicle.

Figure 11 moreover shows that a fluid-tight window may be integrated into one of the lateral walls 34 of the fluid container 14 such that the filling level of the fluid container 14 is visible. Otherwise, the sidewalls 34 may be realized opaquely.

A locking mechanism may furthermore be assigned to the cabin docking station 84 configured to lock a connection between the fluid receiving container 14 and the cabin docking station 84. In this case, a lever 92 may be provided in order to activate or deactivate the locking mechanism. A corresponding locking mechanism may also be provided for the housing docking station 38.

## Claims

1. Liquid receiving container (14) for separately collecting liquid waste,
the liquid receiving container (14) having a container bottom (36) and an upper container opening (16), which is closable by a container cover (50) and openable to fill in liquid waste,
wherein the liquid receiving container (14) is detachably connectable to a trolley housing (4),
wherein the liquid receiving container (14) comprises a container suction port (18) integrated into a lower end section of a sidewall (34) of the liquid receiving container (14) or into the container bottom (36), by means of which a fluidic connection can be produced in order to extract a fluid from a bottom section of an interior (32) of the liquid receiving container (14),
wherein the suction port (18) is realized in the form of an automatically closing check valve, which allows a volume flow from the interior (32) by applying a vacuum at the suction port (18), the valve blocking a volume flow in the opposite direction and being closed as long as a minimum differential pressure between the interior (32) and an outer end of the check valve is not reached,
wherein the minimum differential pressure is chosen in such a way that the valve does not open when the interior (32) of the fluid receiving container (14) is filled with fluid,
wherein the liquid receiving container (14) comprises an associated coupling unit (54) which is configured for detaching the liquid receiving container from a cabin docking station (84),
wherein the coupling unit (54) comprises two or more cavities (56) in the container bottom (36) which are connectable with coupling elements (88) protruding from the cabin docking station (84) to provide a positive connection between the two or more cavities (56) and the coupling elements (88), and
wherein the container suction port (18) is configured to produce a fluidic connection to a station suction port (86) of the cabin docking station (84) when the liquid receiving container (14) is coupled by means of the associated coupling unit (54) to the cabin docking station (84).

2. The liquid receiving container (14) according to claim 1 ,
wherein the liquid receiving container (14) is detachably couplable to a housing docking station (38) of the trolley housing (4) by means of the coupling unit (54), in order to arrange the liquid receiving container (14) in or laterally on the trolley housing (4).

3. The liquid receiving container (14) according to the preceding claim,
wherein the liquid receiving container (14) is laterally integrable into the trolley housing (4).

4. The liquid receiving container (14) according to any one of the preceding claims,
comprising a container pressure port (46), by means of which rinsing fluid can be filled into the interior (32) of the liquid receiving container (14).

5. The liquid receiving container (14) according to any of claims 1 to 3,
wherein the liquid receiving container (14) comprises a container pressure port (46), by means of which rinsing fluid can be filled into the interior (32) of the liquid receiving container (14),
wherein, by means of the associated coupling unit (54), the container pressure port (46) is configured to be coupled and produce a fluidic connection with a station pressure port (90) of the cabin docking station (84).

6. The liquid receiving container (14) according to any of the preceding claims,
further comprising a fluid-tight window, which is integrated into one of the lateral walls of the fluid receiving container (14).

7. The liquid receiving container (14) according to any of the preceding claims,
wherein the container pressure port (46) is realized in a nozzle-like fashion such that rinsing fluid is sprayed into the interior of the fluid receiving container (14) in order to remove potential residues from the inner surfaces of the fluid receiving container (14).

8. The liquid receiving container (14) according to any of the preceding claims,
further comprising fastening elements, which are realized in the form of a plug-type connection.

9. The liquid receiving container (14) according to any of the preceding claims,
further comprising a handle, wherein the handle is arranged on the outer side of a sidewall of the fluid receiving container (14).

10. The liquid receiving container (14) according to any of the preceding claims,
wherein at least one sidewall and/or the bottom of the fluid receiving container (14) is foldable in order to reduce the exterior dimensions of the fluid receiving container (14).

## Patentansprüche

1. Flüssigkeitsaufnahmebehälter (14) zum getrennten Sammeln von flüssigen Abfällen,
wobei der Flüssigkeitsaufnahmebehälter (14) einen Behälterboden (36) und eine obere Behälteröffnung (16) aufweist, die durch einen Behälterdeckel (50) verschließbar und zum Einfüllen von flüssigen Abfällen zu öffnen ist,
wobei der Flüssigkeitsaufnahmebehälter (14) lösbar mit einem Wagengehäuse (4) verbindbar ist,
wobei der Flüssigkeitsaufnahmebehälter (14) eine in einen unteren Endabschnitt einer Seitenwand (34) des Flüssigkeitsaufnahmebehälters (14) oder in den Behälterboden (36) integrierte Behälterabsaugöffnung (18) aufweist, mittels der eine fluidische Verbindung herstellbar ist, um eine Flüssigkeit aus einem unteren Abschnitt eines Innenraums (32) des Flüssigkeitsaufnahmebehälters (14) abzusaugen,
wobei der Sauganschluss (18) als selbsttätig schließendes Rückschlagventil ausgebildet ist, das durch Anlegen eines Unterdrucks am Sauganschluss (18) einen Volumenstrom aus dem Innenraum (32) zulässt, wobei das Ventil einen Volumenstrom in Gegenrichtung sperrt und geschlossen ist, solange ein Mindestdifferenzdruck zwischen dem Innenraum (32) und einem äußeren Ende des Rückschlagventils nicht erreicht ist,
wobei der Mindestdifferenzdruck so gewählt ist, dass sich das Ventil nicht öffnet, wenn der Innenraum (32) des Flüssigkeitsaufnahmebehälters (14) mit Flüssigkeit gefüllt ist, wobei der Flüssigkeitsaufnahmebehälter (14) eine zugehörige Kupplungseinheit (54) aufweist, die zum Lösen des Flüssigkeitsaufnahmebehälters von einer Kabinen-Andockstation (84) ausgebildet ist,
wobei die Kupplungseinheit (54) zwei oder mehr Hohlräume (56) im Behälterboden (36) aufweist, die mit Kupplungselementen (88), die aus der Kabinen-Andockstation (84) herausragen, verbindbar sind, um eine formschlüssige Verbindung zwischen den zwei oder mehr Hohlräumen (56) und den Kupplungselementen (88) herzustellen, und
wobei die Behälter-Ansaugöffnung (18) so konfiguriert ist, dass sie eine Fluidverbindung mit einer Stations-Ansaugöffnung (86) der Kabinen-Andockstation (84) herstellt, wenn der flüssigkeitsaufnehmende Behälter (14) mittels der zugehörigen Kupplungseinheit (54) an die Kabinen-Andockstation (84) gekoppelt wird.

2. Flüssigkeitsaufnahmebehälter (14) nach Anspruch 1,
wobei der Flüssigkeitsaufnahmebehälter (14) mittels der Kupplungseinheit (54) lösbar mit einer Gehäuse-Andockstation (38) des Trolley-Gehäuses (4) kuppelbar ist, um den Flüssigkeitsaufnahmebehälter (14) im oder seitlich am Trolley-Gehäuse (4) anzuordnen.

3. Flüssigkeitsaufnahmebehälter (14) nach dem vorhergehenden Anspruch,
wobei der Flüssigkeitsaufnahmebehälter (14) seitlich in das Wagengehäuse (4) einbaubar ist.

4. Flüssigkeitsaufnahmebehälter (14) nach einem der vorangehenden Ansprüche,
mit einem Behälterdruckanschluss (46), über den Spülflüssigkeit in den Innenraum (32) des Flüssigkeitsaufnahmebehälters (14) eingefüllt werden kann.

5. Flüssigkeitsaufnahmebehälter (14) nach einem der Ansprüche 1 bis 3,
wobei der Flüssigkeitsaufnahmebehälter (14) einen Behälterdruckanschluss (46) aufweist, über den Spülflüssigkeit in den Innenraum (32) des Flüssigkeitsaufnahmebehälters (14) eingefüllt werden kann,
wobei der Behälterdruckanschluss (46) mittels der zugehörigen Kupplungseinheit (54) mit einem Stationsdruckanschluss (90) der Kabinen-Andockstation (84) kuppelbar und fluidisch verbindbar ist.

6. Flüssigkeitsaufnahmebehälter (14) nach einem der vorhergehenden Ansprüche,
ferner mit einem fluiddichten Fenster, das in eine der Seitenwände des Flüssigkeitsaufnahmebehälters (14) integriert ist.

7. Flüssigkeitsaufnahmebehälter (14) nach einem der vorangehenden Ansprüche,
wobei der Behälterdruckanschluss (46) düsenförmig ausgebildet ist, so dass Spülflüssigkeit in das Innere des Flüssigkeitsaufnahmebehälters (14) gesprüht wird, um mögliche Rückstände von den Innenflächen des Flüssigkeitsaufnahmebehälters (14) zu entfernen.

8. Flüssigkeitsaufnahmebehälter (14) nach einem der vorhergehenden Ansprüche,
mit Befestigungselementen, die in Form einer Steckverbindung ausgeführt sind.

9. Flüssigkeitsaufnahmebehälter (14) nach einem der vorangehenden Ansprüche,
ferner umfassend einen Griff, wobei der Griff an der Außenseite einer Seitenwand des Flüssigkeitsaufnahmebehälters (14) angeordnet ist.

10. Flüssigkeitsaufnahmebehälter (14) nach einem der vorangehenden Ansprüche,
wobei mindestens eine Seitenwand und/oder der Boden des Flüssigkeitsaufnahmebehälters (14) faltbar ist, um die Außenabmessungen des Flüssigkeitsaufnahmebehälters (14) zu verringern.

## Revendications

1. Récipient de réception des liquides (14) pour la collecte séparée des déchets liquides,
le conteneur de réception des liquides (14) a un fond de conteneur (36) et une ouverture supérieure de conteneur (16), qui peut être fermée par un couvercle de conteneur (50) et qui peut être ouverte pour remplir les déchets liquides, dans lequel le conteneur de réception des liquides (14) peut être relié de manière amovible à un boîtier de chariot (4),
dans lequel le conteneur de réception de liquide (14) comprend un orifice d'aspiration (18) intégré dans une section d'extrémité inférieure d'une paroi latérale (34) du conteneur de réception de liquide (14) ou dans le fond du conteneur (36), au moyen duquel une connexion fluidique peut être produite afin d'extraire un fluide d'une section inférieure d'un intérieur (32) du conteneur de réception de liquide (14),
dans lequel l'orifice d'aspiration (18) est réalisé sous la forme d'un clapet anti-retour à fermeture automatique, qui permet un écoulement de volume depuis l'intérieur (32) en appliquant un vide à l'orifice d'aspiration (18), le clapet bloquant un écoulement de volume dans la direction opposée et restant fermé tant qu'une pression différentielle minimale entre l'intérieur (32) et une extrémité extérieure du clapet anti-retour n'est pas atteinte,
la pression différentielle minimale est choisie de manière à ce que la soupape ne s'ouvre pas lorsque l'intérieur (32) du récipient de réception de liquide (14) est rempli de liquide,
dans lequel le réservoir de réception de liquide (14) comprend une unité de couplage associée (54) qui est configurée pour détacher le réservoir de réception de liquide d'une station d'accueil de cabine (84),
dans lequel le réservoir de réception de liquide (14) comprend une unité de couplage associée (54) qui est configurée pour détacher le réservoir de réception de liquide d'une station d'accueil de cabine (84),
dans lequel l'unité de couplage (54) comprend deux cavités (56) ou plus dans le fond du conteneur (36) qui peuvent être connectées à des éléments de couplage (88) faisant saillie de la station d'accueil de la cabine (84) pour fournir une connexion positive entre les deux cavités (56) ou plus et les éléments de couplage (88), et
dans lequel l'orifice d'aspiration du conteneur (18) est configuré pour produire une connexion fluidique avec un orifice d'aspiration de la station (86) de la station d'accueil de la cabine (84) lorsque le conteneur de réception de liquide (14) est couplé au moyen de l'unité de couplage associée (54) à la station d'accueil de la cabine (84).

2. Le récipient de réception de liquide (14) selon la revendication 1 ,
dans lequel le récipient de réception de liquide (14) peut être accouplé de manière amovible à une station d'accueil (38) du boîtier du chariot (4) au moyen de l'unité d'accouplement (54), afin de disposer le récipient de réception de liquide (14) dans le boîtier du chariot (4) ou latéralement sur celui-ci.

3. Le récipient de réception de liquide (14) selon la revendication précédente,
dans lequel le récipient de réception de liquide (14) est intégrable latéralement dans le boîtier du chariot (4).

4. Le récipient de réception de liquide (14) selon l'une quelconque des revendications précédentes, dans lequel le récipient de réception de liquide (14) est intégrable latéralement au boîtier du chariot (4). 4, comprenant un orifice de pression de récipient (46), au moyen duquel un liquide de rinçage peut être versé à l'intérieur (32) du récipient de réception de liquide (14).

5. Le récipient de réception de liquide (14) selon l'une des revendications 1 à 3,
dans lequel le récipient de réception de liquide (14) comprend un port de pression de récipient (46), au moyen duquel le liquide de rinçage peut être rempli à l'intérieur (32) du récipient de réception de liquide (14),
dans lequel, au moyen de l'unité de couplage associée (54), l'orifice de pression du réservoir (46) est configuré pour être couplé et produire une connexion fluidique avec un orifice de pression de la station (90) de la station d'accueil de la cabine (84).

6. Le récipient de réception de liquide (14) selon l'une des revendications précédentes,
comprenant en outre une fenêtre étanche aux fluides, intégrée à l'une des parois latérales du réservoir de réception des fluides (14).

7. Le récipient de réception de liquide (14) selon l'une quelconque des revendications précédentes,
dans lequel l'orifice de pression du récipient (46) est réalisé en forme de buse de sorte que le liquide de rinçage est pulvérisé à l'intérieur du récipient de réception de liquide (14) afin d'éliminer les résidus potentiels des surfaces intérieures du récipient de réception de liquide (14).

8. Le récipient de réception de liquide (14) selon l'une quelconque des revendications précédentes,
comprenant en outre des éléments de fixation, qui sont réalisés sous la forme d'une connexion de type bouchon.

9. Le récipient de réception de liquide (14) selon l'une quelconque des revendications précédentes,
comprenant en outre une poignée, dans laquelle la poignée est disposée sur la paroi extérieure du récipient de réception de liquide,
comprenant en outre une poignée, dans laquelle la poignée est disposée sur le côté extérieur d'une paroi latérale du récipient de réception de liquide (14).

10. Le récipient de réception de liquide (14) selon l'une des revendications précédentes,
dans lequel au moins une paroi latérale et/ou le fond du récipient de réception de liquide (14) est pliable afin de réduire les dimensions extérieures du récipient de réception de liquide (14).sur le côté extérieur d'une paroi latérale du récipient de réception de liquide (14).
